# EUROPEAN PATENT APPLICATION

(11) **EP 4 301 020 A1**
(43) Date of publication of application: **03.01.2024**
(21) Application number: 22181476.7
(22) Date of filing: 28.06.2022
(51) Int. Cl.: H04W 12/082, H04W 4/40, H04L 9/08

(54) **VEHICLE, APPARATUS, COMPUTER PROGRAM, AND METHODS FOR REVOCATION OF A DIGITAL KEY**

(71) Applicant: Bayerische Motoren Werke Aktiengesellschaft, 80809 München (DE)
(72) Inventor: Knott, Thorsten, 83104 Tuntenhausen (DE); Reinhart, Lukas, 85354 Freising (DE)

(57) **Abstract**

Embodiments relate to a vehicle, an apparatus, a computer program, and methods for revocation of a digital key. Embodiments particularly provide a method (100) which comprises obtaining (110) information on a use status of the digital key and revoking (120) the digital key based on the information on the use status of the digital key.

## Description

Embodiments of the present disclosure relate to a vehicle, an apparatus, a computer program, and methods for revocation of a digital key. In particular, but not exclusively, embodiments relate to a concept for revocation of digital vehicle keys.

In view of the development in the field of mobility, concepts of locking/unlocking vehicles using a (handheld) user device play an increasingly important role. In car sharing or car rental services, e.g., and key fobs, dedicated/vehicle-specific key devices, and physical keys may be impractical. So, it may be desired to enable users to access vehicles only using their (handheld) user device and a digital key and without using a physical vehicle key.

For this, the Car Connectivity Consortium's (CCC) standard releases 2 et seqq. specify an access system including a smart/user device and software that carry a digital key embedded in secure storage on the smart device, offers an interface from a secure storage to a smartphone operating system and an interface from the smartphone operating system to other applications running on the user device (e.g. a vehicle OEM's app). The access system further provides for a vehicle, allowing carriers of a digital key to operate certain vehicle functionalities and backend systems, interconnecting smart devices and vehicles which allows to share and manage digital keys and offer additional services.

Digital Keys can be invalidated, i.e., the access and driving rights for the key are taken back or revoked. In doing so, digital keys may be invalidated temporarily ("suspension") or permanently ("deletion"). It is noted that, in context of the present disclosure, the term "revocation" refers to temporary as well as to permanent invalidation of digital keys. In practice, the mechanisms to invalidate a digital key are compatible with both applications. As soon and as long a digital key is invalid, the digital key cannot be used for at least part of its functions. In practice, the digital key, e.g., cannot be used for locking or unlocking a respective vehicle. According to some concepts, the digital key is invalidated after a predefined expiration time. However, in some scenarios, the digital key "expires" at inopportune times which might bring a holder of the digital key in an undesired situation, e.g., where the holder cannot lock the vehicle after using the vehicle.

Hence, there may be a demand for an improved concept for revocation of digital keys.

This demand may be satisfied by the subject-matter of the appended independent and dependent claims.

Embodiments of the present disclosure are based on the idea that revocation of a digital key can be based on whether the digital key is currently used or expected to be used in order that the digital key is not invalidated at inopportune times. In automotive applications, a use status of the digital key, e.g., indicates that the digital key is currently in use for operating or driving the vehicle and, thus, indicates that the digital key is supposed to be used later for locking the vehicle after parking. According to the proposed concept, in this event, the digital key is not revoked, even if an expiration time of the digital key may have lapsed and/or an authorized user requested to revoke the digital key. In this way, the digital key, e.g., is not revoked/invalidated as long as the use status indicates that the digital key is used or expected to be used. In other words, the digital key is revoked/invalidated (only) if the use status indicates that the digital key is not needed anymore. The skilled person will appreciate that the proposed concept may be implemented in various ways and may be applied in various revocation mechanisms and applications. Accordingly, embodiments of the present disclosure are not limited to any of the explained specific use cases referring to a specific revocation mechanism and/or application. In particular, the proposed concept may be applied to any applications of digital keys. Such applications include automotive applications as well as any application for electronically secured doors (e.g., electronically secured doors for buildings). As well, embodiments of the present disclosure are not limited to specific kinds of digital keys, specific storage, and/or communication devices storing the digital key. In practice, the proposed concept, e.g., may be applied to user devices as well as to (passive) chip cards, e.g., near field communication (NFC) cards configured to store and present the digital key.

Embodiments provide a method for revocation of a digital key for operating a vehicle, in particular but not exclusively, a digital key for locking/unlocking the vehicle. The method comprises obtaining information on a use status of the digital key and revoking the digital key based on the information on the use status of the digital key. In this way, it can be ensured that the digital key is only revoked when it is appropriate or at least when it is not inopportune. Thus, the proposed concept may save users from scenarios where the user may need the digital key, which, undesirably, is already invalidated, e.g., because another user requested that or an expiration time of the digital key lapsed.

In some embodiments, the information on the use status indicates whether the digital key is currently used or expected to be used. In other words, the information on the use status indicates whether the digital key is being used at this very moment or will be used in the future. In this way, it may be avoided that the digital key is revoked when it is needed currently or later. As well, this may provide that the digital key is only revoked if or when it is no longer needed.

In practice, the information on the use status, e.g., comprises information on a use history of the digital key in order to derive the use status more reliable. In automotive applications, also, information on a vehicle status may be used to assess more accurately whether it is appropriate or inopportune to revoke the digital key.

Revoking the digital key accordingly may comprise revoking the digital key based on the information on the vehicle status and/or the information on the use history of the digital key. The information on the use history may be any information on past uses of the digital key. Such information, e.g., indicates at which times, how often (i.e., number of uses), for how long (i.e., use duration), at which place (i.e., position of the digital key), and/or for which actions/functions or series of actions the digital key was used. The information on the vehicle status may be any information on the vehicle which may serve to determine whether the digital key is needed currently or later. Such information, e.g., indicates a position of the vehicle, whether the vehicle is in use, whether passengers are in the vehicle, a speed or velocity of the vehicle, and/or any other property of the vehicle which are useful for determining whether or when it is appropriate and/or inopportune to revoke the digital key. The skilled person will appreciate that the information on the use history and the vehicle status may allow to determine more accurately and/or reliably whether it is appropriate or inopportune to revoke the digital key. The information on the use history and the vehicle status, e.g., indicates that a user of the digital key, also referred to as "holder", is currently stuck in a traffic jam and may need the digital key later for locking the vehicle after parking. According to the proposed concept, the digital key, hence, may be not revoked even if the expiration time of the digital key lapsed. In a scenario where the information on the use history indicates that a device storing the digital key is lost or stolen and the information on the vehicle status indicates that a potential thief used the vehicle, it may be considered appropriate to revoke the digital key in order to avoid (further) use of the digital key by unauthorized persons.

In some embodiments, the method further comprises obtaining information on a use status of another digital key. In this case, revoking the digital key comprises revoking the digital key based on the information on the use status of the digital key and the use status of the other digital key. The use status of the other digital key allows to determine more reliable whether it is appropriate or inopportune to revoke the digital key. In practice, the other digital key, e.g., at least partly has the same functionalities, e.g., locking/unlocking a vehicle. In rental car services, the use status of the other key, e.g., indicates that user of the vehicle changed and that, therefore, the (first-mentioned) digital key is not supposed to be used anymore and, thus, is to be revoked.

Optionally, the information on the use status of the digital key comprises information on a use history of the digital key and the information on the use status of the other digital key comprises information on a use history of the other digital key. Revoking the digital key may accordingly comprise revoking the digital key based on the information on the use history of the digital key and of the other digital key. This, e.g., allows to determine more reliable if the user of the vehicle changed and, thus, whether the digital key is to be revoked.

In embodiments, the information on the use history of the digital key and the information on the use history of the other digital key may indicate whether the other digital key was used after the digital key. Accordingly, the method may comprise revoking the digital key comprises revoking the digital key if the other digital key was used after the digital key.

Optionally, the method further comprises configuring the vehicle for revoking the digital key if the other digital key was used after the digital key. For this, the vehicle, e.g., is instructed to delete the digital key or consider the digital key as invalid, e.g., by tagging the digital key with information indicating that the digital key is invalid.

In some embodiments, the digital key is stored on a first user device and the other digital key is stored on a second user device. In some scenarios, the digital key, e.g., is stored on a user device of an authority, e.g., an owner of the vehicle or building comprising the electronically secured door, and the other digital key is stored on a user device of a person (temporarily) authorized by the authority entity, e.g., to use the vehicle or access the building.

In some applications, the digital key, e.g., was issued by the second user device storing the other digital key. In doing so, e.g., the second user device or its owner can allow another person, e.g., a friend to access and/or use a vehicle and/or building related to the issued digital key.

Optionally, the method further comprises obtaining information on an expiration time of the digital key. Revoking the digital key accordingly may comprise revoking the digital key further based on the information on the expiration time. In use cases, e.g., the digital key is only revoked if it is considered appropriate and the expiration time lapsed. In this way, it can be ensured that the digital key can be used for at least the expiration time and is revoked afterwards only when it is appropriate.

Alternatively or additionally, the method further comprises obtaining information on a request of a holder of the digital key to revoke the digital key and revoking the digital key comprises revoking the digital key further based on the information on the request. For example, the digital key is only revoked if the holder requested so and if it is appropriate. In this way, it can be made sure that the holder does not invalidate the digital key when it is inopportune. Thus, e.g., it is ensured that the holder does not end up in an undesired situation, e.g., where the holder already (accidentally) invalidated the digital key although the holder still needs the digital key.

Optionally, revoking the digital key comprises providing, to the vehicle, a message indicating that the digital vehicle key is revoked. In this way, the vehicle is informed that the digital key has been revoked. Thus, the vehicle is enabled to recognize invalid digital keys presented to the vehicle. In particular, the vehicle is still able to do so when the vehicle lost a connection to a server/backend handling digital key for the vehicle. In some embodiments, method 100 may also provide that the vehicle to presents a recommendation to revoke the digital key to a user of the vehicle and the digital key is revoked if the user confirms the revocation in response to the recommendation.

In some embodiments, the method further comprises causing the vehicle to present a recommendation to revoke the digital key to a user of the vehicle and revoking the digital key if the user confirms the revocation in response to the recommendation. The recommendation, e.g., is presented if it is considered appropriate to revoke the digital key. Then, the digital key, e.g., is only revoked if the user, e.g., a driver, confirms the revocation. The confirmation allows to ensure even more reliably that it is appropriate to revoke the digital key. In particular, in this way, it is avoided that the digital key is revoked if the user does not agree.

Further embodiments relate to an interrelated complementary method for a user device storing a digital key for locking/unlocking a vehicle and for revocation of the digital key, the method comprising generating information on a use status of the digital key and transmitting the information on the use status of the digital key for revocation of the digital key based on the information on the use status. In this way, the method allows a recipient of the information on the use status to revoke the digital key based on the use status in order to avoid that the digital key is revoked when it is inopportune.

Other embodiments provide a computer program having a program code for performing at least one of the methods proposed herein, when the computer program is executed on a computer, a processor, or a programmable hardware component.

Further embodiments provide an apparatus comprising one or more interfaces for communication and a data processing circuit configured to control the one or more interfaces and execute, using the one or more interfaces, one of the methods proposed herein.

As well, some embodiments provide a vehicle comprising the apparatus proposed herein.

Some examples of apparatuses, methods and/or computer programs will be described in the following by way of example only, and with reference to the accompanying figures, in which
Fig. 1 shows a flow chart schematically illustrating an embodiment of a method for revocation of a digital key;
Fig. 2 shows a flow chart schematically illustrating a method for a user device storing a digital key for locking/unlocking a vehicle and for revocation of the digital key;
Fig. 3 shows a flow chart schematically illustrating an embodiment of the proposed concept;
Fig. 4 shows a flow chart schematically illustrating an application of the proposed concept; and
Fig. 5 shows a block diagram schematically illustrating an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Digital keys, in the sense of identifiers, tokens or any other data structure for gaining access to objects such as vehicles, buildings or any other electronically secured objects play an increasingly important role. In particular, in automotive applications (e.g., car rental/sharing services, personal/private vehicles), for practical reasons, digital keys for locking/unlocking a vehicle using a user device (e.g., mobile/smart phone, tabled, smart watch or any other terminal device) may be preferred over conventional key fobs. Since the proposed concept essentially relates to digital keys, the term "key", in context of the present disclosure, may refer to a digital key.

In some applications, it is desired to invalidate/revoke the digital key temporarily or permanently. In exemplary scenarios, e.g., an authority (e.g., an owner of a vehicle or building) may want to revoke his digital keys and/or digital keys shared with other persons (e.g., friends or customers). The authority, e.g., is holder of one or more digital owner keys which can be used for authentication as owner and/or issuing shared digital keys for the other persons. In automotive applications, also a car manufacturer or car rental/sharing service may want to revoke digital keys, for example, for business and/or security reasons.

The revocation, e.g., is done by a user device, via a human-machine interface (HMI, e.g., of the vehicle), and/or a (external) server (e.g., a backend handling digital keys and/or access rights).

Digital keys, e.g., are revoked when a predefined expiration time has expired. In some scenarios, however, the expiration time may lapse in an inopportune situation, e.g., when passengers are inside a locked vehicle or when the vehicle is currently in use. Hence, the use of expiring digital keys may be impractical.

One objective of the present disclosure, hence, may be to provide an improved concept for revocation of digital keys.

One motivation of the proposed concept is to minimize risks while maximizing usability and transparency which may exhibit potentially conflicting requirements which may need to be balanced. In automotive applications, e.g., in revoking a digital key for a vehicle, safety of passengers is may have to be weighted against access rights of a holder of the digital key.

The subject-matter of the appended independent and dependent claims addresses the aforementioned objective and motivation.

The concept proposed herein, in particular, comprises a method for revocation of a digital key which should be explained in more detail below with reference to the appended drawings.

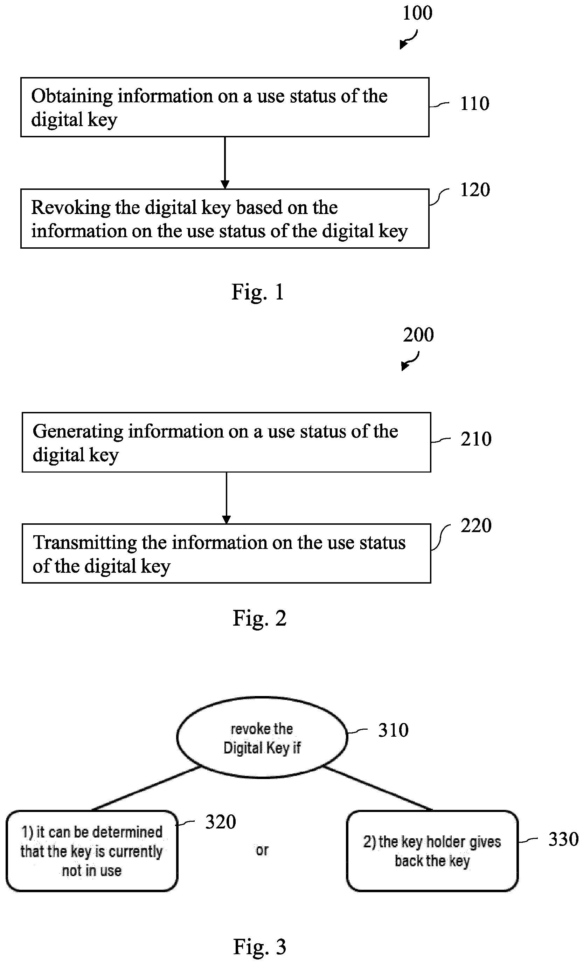

Fig. 1 shows a flow chart schematically illustrating an embodiment of a method 100 for revocation of a digital key. As mentioned before, digital keys, e.g., are used in automotive applications. Embodiments of the proposed method 100, hence, particularly relate to digital keys for locking/unlocking vehicles. The skilled person having benefit from the present disclosure will understand that digital keys may be also used in other applications, e.g., electronically secured building doors. The skilled person, hence, will appreciate that the proposed concept may be also applied to any application of digital keys including automotive as well as other applications, since the proposed concept as such is not necessarily related to any peculiarities of automotive applications.

As can be seen from the flow chart, method 100 comprises obtaining 110 information on a use status of the digital key and revoking 120 the digital key based on the information on the use status of the digital key.

In some applications, access rights may be handled or managed by an authority holding a digital master or owner key or by a server or backend. Revocation mechanisms, accordingly, may provide that the revocation is carried out by such an authority or server/backend. In revocation mechanisms for automotive applications, the revocation may be also or alternatively initiated and/or executed by a vehicle. The skilled person having benefit from the present disclosure, therefore, will appreciate that the proposed concept may be applied to any revocation mechanism and that the revocation may be carried out by any entity involved in the revocation. Accordingly, method 100 may be executed by different entities or devices involved in the revocation mechanism. In applications, method 100, e.g., is executed by a server handling the digital key and access rights. In other applications, method 100 may be also executed by a vehicle or a user device storing the digital key.

The information on the use status may be any information that relates to past, present, and/or future usage of the digital key, thereby indicating whether it is appropriate and/or inopportune to revoke the digital key. Accordingly, the information on the use status allows to assess whether it is appropriate and/or inopportune to revoke the digital key. In examples, revoking 120 the digital key based on the information on the use status, accordingly, may comprise assessing based on the information on the use status whether it is appropriate and/or inopportune to revoke the digital key. The digital key, then, may be revoked only if the information on the use status indicates that it is appropriate. Otherwise, the digital key remains or is maintained valid. In this way, it can be ensured that the digital key does not become invalid at inconvenient times or in inconvenient situations.

The information on the use status, e.g., is obtained from a user device storing the digital key and/or from an object (e.g., a vehicle) to be locked/unlocked by the digital key.

In the present disclosure, revoking 120 the digital key can be understood as any measure or process to disable or invalidate the digital key such that the digital key cannot be used anymore for its functions, e.g., locking/unlocking. In examples, revoking 120 the digital key comprises deleting the digital key from the user device and/or the object which is supposed to be locked or unlocked by the digital key and, therefore, stores the digital key. In other examples, the digital key may be declared invalid to the object and/or the user device such that the digital key is recognized as invalid/disabled. In order to do so, e.g., one or more respective messages indicating that the digital key is invalid or to be deleted may be exchanged. In automotive applications, e.g., the vehicle, in this way, is enabled to recognize invalid digital keys. In automotive applications, the vehicle may be configured to revoke the digital key (automatically) if it recognizes that the digital key is no longer needed, e.g., if another digital key is used for operating the vehicle after the (previously mentioned) digital key has been used. In order to do so, the vehicle may be provided with the information on the use status of the digital key and the other digital key.

Optionally, prior to revoking the digital key, the vehicle may present a recommendation to revoke the digital key to a user, e.g., a passenger, of the vehicle and the digital key may be revoked if the user confirms the revocation in response to the recommendation. For this, the vehicle, e.g., is instructed by the server handling the digital key to do so and the vehicle may present the recommendation to the user via a display or any other HMI. In this way, it may be ensured that the digital key is not revoked when the user of the vehicle or passenger considers it inopportune or unsafe.

Digital keys, in practice, are available in different types and forms. In embodiments, digital keys, e.g., are indicative of or include an identifier (ID) of a user, any token for authentication of a user, and/or any other data structure or program functioning as a virtual key, in the sense of means for locking/unlocking a desired object. As well, the object to be locked/unlocked can be anything, e.g., a vehicle or any object or building accessible through an electronically secured door or the like. The skilled person having benefit from the present disclosure will, therefore, appreciate that the proposed concept may be applied to any kind or purpose of digital keys.

In some embodiments, the information on the use status indicates whether the digital key is currently used or expected to be used. The information on the use status, e.g., comprises information on a current situation/scenario that indicates whether the digital key is currently or later needed. As well, the information on the use status may indicate whether it is currently inopportune to revoke the digital key. In an exemplary scenario, the digital key, e.g., is intended to be used for valet parking ("parking service") and the information on the use status indicates whether the valet parking completed parking the vehicle. Accordingly, the information on the use status indicates that the digital key is used or expected to be used if the parking is not completed yet and vice versa.

In embodiments, the information on the use status that the digital key is currently in use, e.g., for operating the vehicle. Such information on the use status may suggest that the digital key is currently used and/or is expected to be used (later), for example, for turning off and/or locking the vehicle.

The skilled person having profit of the present disclosure will appreciate that a certain actions, sequence of actions and/or their timing may indicate whether the digital key is still needed. Additionally or alternatively, the information on the use status may include information on a use history of the digital key. The use history, in embodiments, may be indicative of certain actions, sequence of actions and/or their timing, thereby indicating whether the digital key is still needed. In practice, the information on the use history, e.g., indicates that the digital key was used for unlocking and/or driving the vehicle. The information on the use history, in this way, indicates that the digital key may be needed later for locking the vehicle in order to protect the vehicle from theft. Therefore, it may be inopportune to revoke the digital key before the vehicle is locked. Accordingly, the digital key may be only revoked if the information on the use history indicates that the vehicle has been locked using the digital key after unlocking or driving.

In particular, in applications for car rental/sharing services, the information on the use status optionally includes positional information. The positional information, e.g., indicates whether the vehicle was returned at a predefined location for returning the vehicle. In such applications, the digital key, e.g., is revoked not until and/or as soon as the vehicle was returned.

Particularly in such applications, the information on the use status may also comprise information on a vehicle status of the vehicle in order to assess even more reliably whether it is appropriate or inopportune to revoke the digital key. Accordingly, the digital key may be revoked further based on the information on the vehicle status. The information on the vehicle status, e.g., indicates whether the vehicle and, thus, the digital key for operating the vehicle is in use. Examples of such information may indicate a position of the vehicle, a velocity and/or driving status of the vehicle. Alternatively or additionally, the information on the vehicle status may indicate whether the vehicle is currently locked or unlocked and/or whether one or more passengers are inside the vehicle. The digital key, then, e.g., is only revoked if the vehicle is standing still, an engine of the vehicle is turned off, and/or no passengers inside the vehicle. In this way, it may be avoided that the digital key becomes invalid during use, that the vehicle remains unlocked, and/or that passengers are locked. Thus, the proposed concept offers a higher level of safety.

In practice, multiple digital keys may exist for the same object, e.g., for the same vehicle, which may be stored on different user devices. The digital key may be stored on a first user device and the other digital key may be stored on a second user device. In embodiments, the second user device may belong to the owner or any other authority and the other digital key may enable the owner or the second user device to issue shared digital keys for other persons, e.g., friends or customers. The digital key, accordingly, may be issued by the second user device storing the other digital key.

The skilled person having benefit from the present disclosure will appreciate that, in case of multiple digital keys for the same object, the usage of one or more other digital keys may indicate whether the digital key is used or expected to be used. So, alternatively or additionally, method 100 further comprises obtaining information on a use status of another digital key, and revoking the digital key comprises revoking the digital key based on the information on the use status of the digital key and the use status of the other digital key, as laid out in more detail later, for a more reliable assessment whether it is appropriate or inopportune to revoke the digital key. In exemplary applications, the other digital key is held by another user and the digital key is (only) revoked if/when the information on the use status of the other digital key indicates that the other digital key was used after the (first-mentioned) digital key, thereby indicating that the other user has taken over the vehicle. This may ensure that the digital key is only revoked when the other user has taken over the vehicle and may avoid that the digital key is revoked in inappropriate situations only because the information on the use status of the digital key indicates that it may be appropriate. In applications, this may avoid that the digital key is revoked such that a user is locked out of the vehicle in an inappropriate situation, e.g., at a stopover before reaching a desired destination where the other user is supposed to take over the vehicle. So, in this way, not only the security of the vehicle (e.g., against theft), but also the safety of the user (e.g., against being locked in or out of the vehicle) may be ensured. This approach, therefore, may be preferred particularly in applications providing that the vehicle is successively used by different users. However, the skilled person having benefit from the present disclosure will appreciate that the proposed concept may be also applied in embodiments where the digital keys are held by the same user. Analogously, information on a use status of a key fob (e.g., a physical key) may be obtained and the digital key may be revoked based on the information on the use status of the key fob.

In some embodiments, different kinds or portions of the information on the use status of the digital key and/or the other digital key may be used together in order to assess whether it is appropriate or inopportune to revoke the digital key. In practice, e.g., the digital key is revoked based on a combination of the information on the vehicle status, and/or the information on the use status of the other digital key, and/or information on the use history of the digital key. In this way, it can be more reliably assessed whether revoking the digital key is (currently) appropriate or inopportune.

In practice, the proposed concept may be implemented together with an interrelated and complementary method for a user device. An embodiment of such a method is explained in more detail below with reference to Fig. 2.

Fig. 2 shows a flow chart schematically illustrating a method 200 for a user device storing a digital key for locking/unlocking a vehicle and for revocation of the digital key.

As the flow chart indicates, method 200 comprises generating information on a use status of the digital key and transmitting the information on the use status of the digital key for revocation of the digital key based on the information on the use status.

In embodiments, the user device, unlike a dedicated or vehicle-specific key device, a key fob, and a physical key, is not dedicated to a certain vehicle. The user device, in practice, may be a non-vehicle-related user device (unlike a dedicated key device or key fob), e.g., a personal communications device such as a mobile phone, tablet, smart watch or the like.

In practice, the user device, e.g., is communicatively coupled and transmits the information on the use status to an entity which handles access rights and, in doing so, may revoke the digital key. As mentioned above, the entity, e.g., is a server. In automotive applications, the server, e.g., is a backend of a car manufacturer or car rental/sharing service for the vehicle.

For generating the information on the use status, the user device, e.g., records usage of the digital key. In practice, the user device, e.g., records when, where, and/or for which purpose the digital key was used. In examples, the user device, e.g., records that the digital key was used for unlocking the vehicle and a time stamp indicating when the digital key was used for unlocking the vehicle. The information on the use status, hence, may indicate that the vehicle was unlocked and may include the time stamp. In doing so, the information on the use status may indicate that the vehicle is currently unlocked and that the digital key may need to be used later for locking the vehicle.

Transmitting such information on the use status to the server or vehicle allows the server or vehicle to determine whether it is appropriate or inopportune to revoke the digital key. In case that the information on the use status indicates that the digital key may be needed later for locking the vehicle, the server or vehicle may consider revocation of the digital key inopportune and, thus, may refrain from doing so. So, method 200 allows revocation mechanisms to revoke digital key only if it is appropriate in order to avoid leaving a user in undesired situations with a revoked or invalidated digital key. Method 200, so, provides an improved concept of revocation of digital keys.

In practice, method 200 is executed by the user device.

It is noted that aspects described in connection with one of the proposed methods may also apply to the other method. Further aspects of the proposed concept and methods should be described below in more detail with reference to exemplary embodiments and applications illustrated by further appended drawings.

Fig. 3 shows a flow chart schematically illustrating am embodiment of the proposed concept. As can be seen from the flow chart, this embodiment relates to a revocation scheme where the revocation process, here schematically illustrated by the ellipse numbered 310, depends on multiple criteria.

A first criterion, schematically illustrated by the box numbered 330, is that a holder of the digital key "gives back" the digital key ("key"), i.e., requests or agrees that the digital key is revoked. To this end, the holder, i.e., the user storing the digital key on his or her user device, in this case, e.g., transmits, using the user device, a request to revoke the digital key to a server handling/managing digital keys. The request indicates that the holder intends to give back the digital key, i.e., that the digital key gets revoked or invalidated. In order to verify that the holder requested to revoke the digital key, it may be checked or verified whether the request for revocation was submitted by the same user device that "carries" (i.e., stores) the digital key and whether this user device has a network connection. Additionally or alternatively, it may be checked or verified whether the request was submitted by an owner of this user device, e.g., by checking whether the request was submitted using Remote Device Wipe (also called "Remote Wipe") and/or whether the user device is in Device Lost Mode.

A second criterion, schematically illustrated by the box numbered 320, is that the digital key ("key") is currently not in use. In context of the present embodiment, "not in use" may mean that the digital key is currently not used for any of its functions, e.g., locking or unlocking, but as well, that an intended use case including multiple or a series of uses of the digital key, e.g., for unlocking, driving, and locking the vehicle, is not yet completed and, thus, the digital key will be used or needed. To assess this, the information on the use status applied for this may indicate whether the digital key is currently used or will be used. In practice, the information on the use status may include any information that may be used to derive whether the digital key is currently used or will be used. In exemplary applications, such information may include information on an object (e.g., the vehicle or building door) operated (e.g., to be locked and unlocked) using the digital key and/or information the use status of another digital key for the same object.

The information on the use status of the digital key and the other digital key, e.g., comprises information on a respective use history of the digital key and the other digital key. Such information, e.g., indicates when and/or for which actions the digital key and the other digital key are or were used, thereby indicating whether the digital key and/or the other digital key are expected to be used. Further, the information on the use status may include information on the vehicle status. In this way, the information on the use status, e.g., indicates that the vehicle is currently in use (e.g., not locked) and another (different) digital key is used at the vehicle, e.g., that another digital key is currently used for driving the vehicle. In doing so, the information on the use case may indicate that the digital key is not in use.

In particular, the information on the use history of the digital key and the information on the use history of the other digital key may indicate whether the other digital key was used after the digital key. In an exemplary scenario, the information on the use status, e.g., indicates that the vehicle has been locked and that, for this, the other digital key was used, thereby indicating that the digital key is not in use anymore.

In the present embodiment, the digital key may be only revoked if at least one of the above criteria is met. To this end, the vehicle may delete the digital key or may consider the digital key invalid, e.g., when the other digital key was used after the digital key. The skilled person having benefit from the present disclosure will appreciate that also other and more criteria may be applied (instead of the first criterion) and that, in other embodiments, the digital key may be only revoked if multiple or all criteria are met.

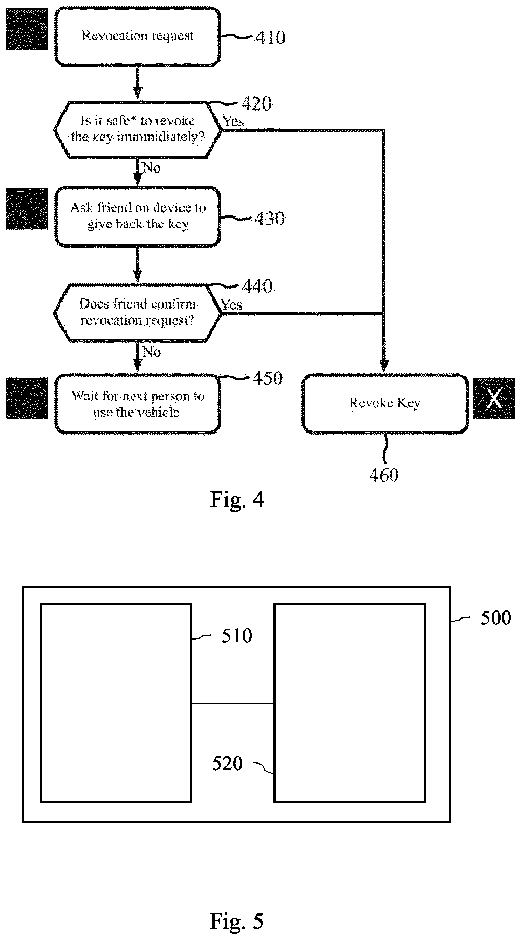

Further aspects and details are described below with reference to Fig. 4 which shows a flow chart schematically illustrating an application of the proposed concept. In particular, Fig. 4 relates to a scenario where a request for revocation of a digital key for a vehicle is submitted in a first step 410. The digital key, e.g., is held by a first user ("holder") and the request, also referred to as "revocation request", e.g., is submitted to the server managing digital keys of the vehicle and by a second user responsible of the vehicle, e.g., the owner, using his or her user device. For this, the owner or the respective user device of the owner may use a digital master key for authentication. The digital key, in the present example, is a digital key shared with the first user, here a friend, and a respective user device of the first user, e.g., for sharing the vehicle with the first user.

The server may, then, in a further step 420 check whether it is "safe" and/or appropriate to revoke the digital key (immediately) in order to only revoke the digital key if it is safe and/or appropriate. For this, the information on the use status of the digital key and/or information on one or more other digital keys may be applied, as mentioned above. If it is considered safe or appropriate to revoke the digital key, the digital key is revoked in another step 460. If it is not considered safe to revoke the digital key immediately, the first user is asked to give back the digital key in another step 430. For this, the user device and/or the vehicle may ask the first user (upon instruction of the server) for confirmation to revoke the digital key. To this end, the first user may receive a notification on his or her user device asking the first user to give back the digital key. Then, in a next step 440, it is checked whether the first user confirmed the revocation. If the first user confirms the revocation, the digital key is revoked in step 460. If the first user does not confirm the revocation or rejects the revocation, the digital key may be revoked (see box numbered 450) when a third user uses the vehicle. In order to do so, the digital key may be associated with the first user and revoked based on the information on the use status of another digital key of the third user. This information, e.g., indicates whether other digital key of the third user is or was used, e.g., for locking, unlocking, and/or starting the vehicle, thereby indicating whether the digital key of the first user is still in use. In exemplary scenarios, the information on the use status of the other digital key, e.g., indicates that the other digital key was used for unlocking the vehicle, thereby indicating that the digital key of the first user is no longer used. This particularly applies for use cases where the use of the other digital key indicates that the formerly used digital key is no longer needed, e.g., in car sharing services where the vehicle is used successively by different users or when the vehicle is sold and the owner of the vehicle changes. However, the proposed concept also applies to use cases where the digital keys belong to the same user.

In addition, step 420 may be iteratively repeated in order to revoke the digital key as soon as it is considered safe and/or appropriate to do so. In doing so, the digital key may be revoked even if the first user rejected the revocation in steps 430 and 440.

The skilled person will appreciate that the aspects described in connection with Fig. 3 and 4 are limited to specific revocation mechanisms or application. In particular, the proposed concept is not limited to automotive applications and/or revocation mechanisms in which a server handles the digital key. In practice, the proposed concept may be also applied in other applications and/or other revocation mechanisms, e.g., in which the vehicle or user device handles the digital key.

It is also noted that aspects as to the revocation based on the usage of another digital key may be analogously applied to key fobs, dedicated vehicle keys, and/or physical keys. In embodiments, e.g., information on the use status of a key fob, a dedicated vehicle key, and/or a physical key is obtained and the digital key is revoked based on the information on the use status of key fob, a dedicated vehicle key, and/or physical key. In practice, e.g., the digital key is only revoked if the information on the use status of the key fob, the dedicated vehicle key, and/or the physical key indicates that at least one of the key fob, the dedicated vehicle key, and/or the physical key was used after the digital key, thereby indicating that the digital key is no longer needed and that it is appropriate to revoke the digital key.

The revocation of the digital key may be further based on an on a predefined expiration time of the digital key. In practice, the digital key, e.g., is only revoked if the revocation is considered appropriate and if the expiration time expired or lapsed. In this way, it may be ensured that the digital key is at least valid for the predefined expiration time and not invalidated before the expiration time lapsed.

Further details and aspects of the proposed concept are described below with reference to some more exemplary use cases or scenarios.

In a first exemplary use case, the digital key of the vehicle is shared for a limited amount of time. So, the digital key exhibits a predefined expiration time which may laps before a person with whom the digital key was shared reaches a predefined destination (e.g., a predefined return location, or home), for example, because of a traffic jam. The information on the use status of the digital key and/or the information on the vehicle status may accordingly indicate that the digital key is still needed (e.g., based on positional or driving data of the vehicle and/or information on the use status indicating that the digital key is currently in use). The digital key, then, is only revoked as soon as the person holding the shared digital key reached the predefined destination. In this way, a vehicle owner may need to wait longer than the expiration time for the digital key to be revoked. However, in this way, the vehicle can be returned and the person holding the shared digital key can safely reach the predefined destination.

In another exemplary scenario, the vehicle owner may request (e.g., at the server handling the digital key) to revoke the shared digital key immediately or as soon as possible. However, the digital key may be currently in use. Accordingly, the information on the use status of the digital key may indicate that the digital key is currently in use. In this case, the digital key, according to the proposed concept, may not be revoked immediately but only as soon as the person holding the shared digital key confirms the revocation. Again, in this case, the vehicle owner may need to wait longer for the digital key to be returned. But the person holding the shared digital key may reach a desired destination.

In yet another exemplary scenario, the person holding the shared digital key may lose the user device storing this digital key and put this user device into a "lost mode" (e.g., using another user device and via an OEM, original equipment manufacturer, cloud). In this case, the information on the use status may accordingly indicate that the user device storing the shared digital key and, thus, the shared digital key is lost, thereby indicating that the digital key is to be revoked for security reasons. In this case, the digital key is revoked (immediately). In applications in which an OEM backend or server handles the digital key, the digital key may be at least revoked as soon as the OEM backend or server can reach the lost user device. In this way, the lost user device and the shared digital key cannot be used. This avoids that the digital key is further used, e.g., by unauthorized persons or a potential thief. In case that the potential thief already used the digital key for driving the vehicle, it may be provided that the digital key at least cannot be used for starting the vehicle again once the vehicle has been turned off (for a predefined time, e.g., ten seconds). In this way, it may be ensured that the thief and other persons (e.g., other traffic participants) are not endangered.

In a further scenario, the person holding the digital key may give back the digital kay by accident, e.g., while playing around with the user device storing the digital key. The digital key, then, may be deleted as soon as the user device established a connection to the OEM backend or server handling the digital key. In this case, a new digital key might be requested from the vehicle owner and the vehicle owner may need to issue a new shared digital key. This, e.g., can be avoided by an additional warning message for confirmation when the digital key is given back.

In yet another scenario, a digital service for operating or locking/unlocking the vehicle using digital keys may expire. In this case, at least one digital key, e.g., the one of an owner of the vehicle, may be kept valid after the digital service expired until a key fob, dedicated vehicle key, and/or physical key is used. In this way, it may be ensured that the owner can still operate the vehicle until the key fob, dedicated vehicle key, and/or physical key is available. Thus, the safety of the owner may be ensured.

The concept proposed herein, in practice, may be implemented in a computer program (product) having a program code for performing at least one of the proposed methods, when the computer program is executed on a computer, a processor, or a programmable hardware component.

Also, the proposed concept may be implemented in an apparatus, as laid out in more detail below with reference to Fig. 5.

Fig. 5 shows a block diagram schematically illustrating an embodiment of an apparatus 500 implementing the proposed concept.

As can be seen from Fig. 5, apparatus 500 comprises one or more interfaces 510 for communication and a data processing circuit 520 configured to control the one or more interfaces 510. The data processing circuit 520 is further configured to control the one or more interfaces and execute, using the one or more interfaces, one of the proposed methods. That is, the apparatus 500 may be configured to execute method 100 or 200. Accordingly, the apparatus 500 may be implemented in a user device, a server, or a vehicle, respectively.

In embodiments the one or more interfaces 510 may comprise means for communication with vehicles or another server. For this, the one or more interfaces 510 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 510 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 510 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 5, the one or more interfaces 510 are coupled to the data processing circuit 520. In embodiments the data processing circuit 520 may comprise any means for processing information according to one of the proposed methods. The data processing circuit 520 may be implemented using one or more processing units, one or more processing devices, any means for processing, such as a processor, a computer or a programmable hardware component being operable with accordingly adapted software. In other words, the described functions of the data processing circuit 520 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

### References

- 100: method
- 110: obtaining information on a use status of the digital key
- 120: revoking the digital key based on the information on the use status of the digital key
- 200: method for a user device
- 210: generating information on a use status of the digital key
- 220: transmitting the information on the use status of the digital key
- 310: revocation scheme
- 320: step
- 330: step
- 410: step
- 420: step
- 430: step
- 440: step
- 450: step
- 460: step
- 500: apparatus
- 510: one or more interfaces
- 520: data processing circuit

## Claims

1. A method (100) for revocation of a digital key for locking/unlocking a vehicle, the method (100) comprising:
obtaining (110) information on a use status of the digital key; and
revoking (120) the digital key based on the information on the use status of the digital key.

2. The method (100) of claim 1, wherein the information on the use status indicates whether the digital key is currently used or expected to be used.

3. The method (100) of claim 1 or 2, wherein the information on the use status comprises information on a vehicle status of the vehicle and information on a use history of the digital key, and wherein revoking (120) the digital key comprises revoking the digital key based on the information on the vehicle status and the information on the use history of the digital key.

4. The method (100) of any one of the preceding claims, wherein the method (100) further comprises obtaining information on a use status of another digital key, and wherein revoking (120) the digital key comprises revoking the digital key based on the information on the use status of the digital key and the use status of the other digital key.

5. The method (100) of claim 4, wherein the information on the use status of the digital key comprises information on a use history of the digital key, and wherein the information on the use status of the other digital key comprises information on a use history of the other digital key, and wherein revoking (120) the digital key comprises revoking the digital key based on the information on the use history of the digital key and of the other digital key.

6. The method (100) of claim 5, wherein the information on the use history of the digital key and the information on the use history of the other digital key indicate whether the other digital key was used after the digital key, and wherein revoking (120) the digital key comprises revoking the digital key if the other digital key was used after the digital key.

7. The method (100) of claim 6, wherein the method (100) further comprises configuring the vehicle for revoking the digital key if the other digital key was used after the digital key.

8. The method (100) of any one of the claims 4 to 7, wherein the digital key is stored on a first user device, and wherein the other digital key is stored on a second user device.

9. The method (100) of claim 8, wherein the digital key was issued by the second user device storing the other digital key.

10. The method (100) of any one of the preceding claims, wherein the method (100) further comprises obtaining information on an expiration time of the digital key, and wherein revoking (120) the digital key comprises revoking the digital key further based on the information on the expiration time.

11. The method (100) of any one of the preceding claims, wherein the method (100) further comprises obtaining information on a request of a holder of the digital key to revoke the digital key, and wherein revoking (120) the digital key comprises revoking the digital key further based on the information on the request.

12. A method (200) for a user device storing a digital key for locking/unlocking a vehicle and for revocation of the digital key, the method (200) comprising:
generating (210) information on a use status of the digital key; and
transmitting (220) the information on the use status of the digital key for revocation of the digital key based on the information on the use status.

13. A computer program having a program code for performing at least one of the methods (100, 200) of the preceding claims, when the computer program is executed on a computer, a processor, or a programmable hardware component.

14. An apparatus (500) comprising:
one or more interfaces (510) for communication; and
a data processing circuit (520) configured to:
control the one or more interfaces (510); and
execute, using the one or more interfaces (510), one of the methods (100, 200) of the claims 1 to 12.

15. A vehicle comprising the apparatus (500) of claim 14.
